# FASCICULE DE BREVET EUROPEEN

(11) **EP 2 347 521 B1**
(45) Date de publication et mention de la délivrance du brevet: **15.08.2012**
(21) Numéro de dépôt: 09783977.3
(22) Date de dépôt: 13.10.2009
(51) Int. Cl.: H04B 3/54, H04B 3/56, H04L 25/02

(54) **SYSTEME AVIONIQUE COMPRENANT UN CONTROLEUR ET AU MOINS UN PERIPHERIQUE RELIES PAR UNE LIGNE MUTUALISEE POUR LA PUISSANCE ET LES DONNEES**
AVIONICSYSTEM MIT EINER STEUERUNG UND MINDESTENS EINEM PERIPHERIEGERÄT, DIE DURCH EINE FÜR STROM UND DATEN MUTUALISIERTE LEITUNG VERBUNDEN SIND
AVIONIC SYSTEM COMPRISING A CONTROLLER AND AT LEAST ONE PERIPHERAL THAT ARE LINKED BY A LINE MUTUALIZED FOR POWER AND DATA

(30) Priorité: 13.10.2008 FR 0856924
(43) Date de publication de la demande: 27.07.2011
(73) Titulaire: SAGEM Défense Sécurité, 75015 Paris (FR)
(72) Inventeur: GUILLOT, François, F-75015 Paris (FR); COURTEILLE, Jean-Marie, F-75015 Paris (FR)
(74) Mandataire: Callon de Lamarck, Jean-Robert
(86) Numéro de dépôt international: PCT/EP2009/063344
(87) Numéro de publication internationale: WO 2010/043613

(56) Documents cités:
- EP-A- 1 134 909
- US-A- 5 210 519
- US-A- 5 777 769
- US-A1- 2004 070 912
- US-A1- 2004 258 141
- US-B1- 6 192 069

## Description

Le domaine de l'invention est celui des équipements avioniques. L'invention concerne plus précisément les systèmes avioniques comprenant un contrôleur central et un ou plusieurs équipements périphériques distants reliés au contrôleur central par l'intermédiaire d'une ligne électrique de puissance.

Les systèmes avioniques comprennent aujourd'hui des périphériques distants de type capteurs ou actionneurs de plus en plus intelligents. Il s'agit notamment d'équipements critiques de commande de vol, par exemple des vérins électriques, qui sont non seulement commandés par le contrôleur central mais également aptes à élaborer des rapports destinés au contrôleur central.

Un canal de communication bidirectionnelle simultanée (« full duplex » selon la terminologue anglo-saxonne) entre le contrôleur central et un périphérique distant s'avère alors nécessaire d'une part pour que le contrôleur central puisse transmettre ses ordres et consignes au périphérique distant et d'autre part pour que le périphérique puisse faire remonter ses rapports au contrôleur central.

Les échanges de données sont typiquement de l'ordre de 10 000 échantillons par seconde, de sorte qu'une bande passante de l'ordre de 100 kbits à 1 Mbits s'avère nécessaire. On relèvera que les besoins en termes de bande passante sont plus particulièrement élevés lorsque le périphérique forme avec le contrôleur central une boucle d'asservissement.

On souhaite ainsi d'une part alimenter en puissance électrique un périphérique distant (typiquement plusieurs kW) et d'autre part assurer un canal de communication bidirectionnelle simultanée avec un périphérique distant (jusqu'à 50m typiquement) avec un débit d'informations utiles de 1 Mbits/s.

Par ailleurs, un tel système avionique est destiné à être utilisé dans un environnement avion composite qui présente des contraintes spécifiques, notamment pour ce qui concerne la conception des composants électroniques embarqués (respect de la norme DO254).

Ainsi, pour assurer un isolement 1500V répondant aux contraintes foudre, il s'avère nécessaire d'opposer un chemin haute impédance aux passages de courants induits. Par ailleurs, les contraintes de Compatibilité Electro Magnétique (CEM) imposent que le référentiel CEM ne soit pas à la masse métallique, tout du moins pour les composantes basses fréquences.

On connaît une technologie dite des courants porteurs en ligne (CPL) qui permet de mutualiser une seule ligne bifilaire pour la transmission de puissance et de données bidirectionnelles. Selon cette technologie, les informations numériques sont modulées et superposées au signal électrique de manière à pouvoir passer par les lignes électriques.

La technologie CPL est toutefois très polluante en termes de rayonnement et par conséquent incompatible avec les contraintes CEM d'un environnement avion. La justification DO254 de composants commerciaux (composants COTS : Commercial Off The Shelf) complexes est par ailleurs très difficile à réaliser.

La technologie CPL s'avère donc impropre à une utilisation dans un système avionique.

Il n'en reste pas moins qu'il serait judicieux de pouvoir utiliser la ligne électrique de puissance d'un système avionique à la fois pour alimenter le ou les périphériques en puissance électrique et pour porter des données transitant en mode bidirectionnel simultané entre le contrôleur et le ou les périphériques, cela tout en respectant les contraintes propres à l'environnement dans lequel ce système est destiné à être utilisé. On connaît du document US 2004/0258141 A1 des dispositifs conformes au préambule des revendications 1 et 2. Ces dispositifs ne sont toutefois pas adaptés pour réaliser une communication bidirectionnelle simultanée de données en bande de base. A fortiori, ces dispositifs ne mettent pas en oeuvre de discrimination, parmi les données transitant sur la ligne électrique, de données émises en local de données à recevoir. On connaît également de EP 1 134 909 A1 un système de surveillance exploitant une ligne électrique mutualisée puissance/données sur laquelle transitent des données qui ne sont pas échangées en bande de base mais modulées sur une porteuse. La discrimination, parmi les données transitant sur la ligne, entre les données émises en local et les données à recevoir est réalisée au moyen de deux filtres passe-bande centrées autour de fréquences différentes. Une telle discrimination ne peut toutefois pas être appliquée avec succès à une transmission en bande de base.

L'invention a pour objectif de répondre à ce besoin et propose à cet effet, selon un premier aspect, un dispositif formant contrôleur central tel que défini par la revendication 1.

Selon un second aspect, l'invention propose un dispositif formant périphérique distant tel que défini par la revendication 2.

Certains aspects préférés, mais non limitatifs, du dispositif selon le premier ou le second aspect de l'invention sont définis par les revendications dépendantes 2-14.

Selon un autre aspect, l'invention concerne un système comprenant un dispositif formant contrôleur central selon le premier aspect de l'invention relié par l'intermédiaire d'une ligne électrique de puissance à un ou plusieurs dispositifs formant périphérique distant selon le second aspect de l'invention.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre un mode de réalisation possible d'un contrôleur central conforme à l'invention ;
- la figure 2 illustre un mode de réalisation possible d'un périphérique distant conforme à l'invention ;
- la figure 3 représente des chronogrammes correspondant aux différents signaux reportés sur les figures 1 et 2 ;
- la figure 4 illustre un mode de réalisation possible des échanges de données entre le contrôleur central et les différents périphériques auxquels il est relié ;
- la figure 5 représente un mode de réalisation possible d'un traitement haut niveau réalisé sur les données entrantes et sortantes.

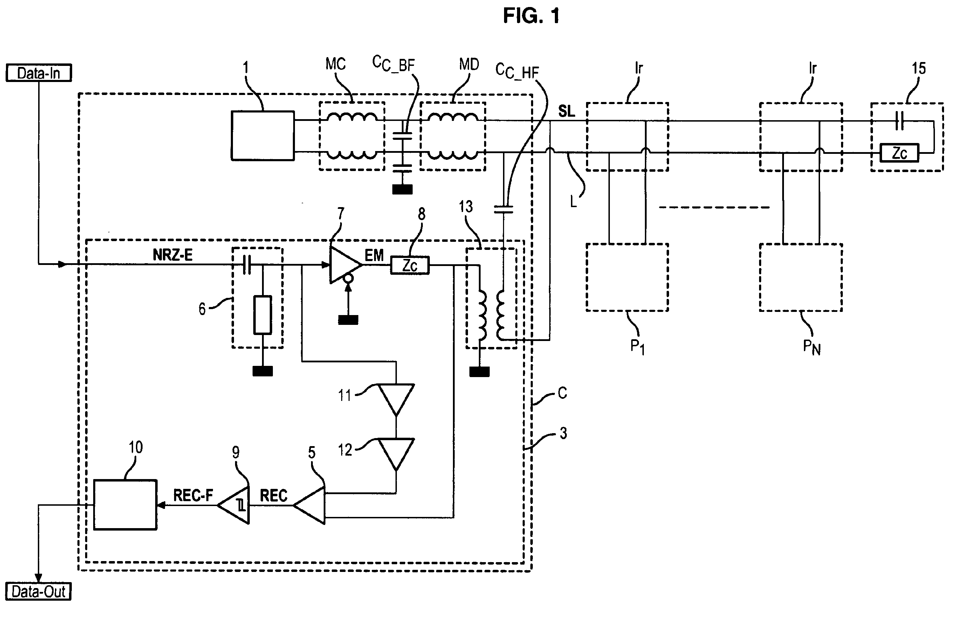

En référence à la figure 1, on a représenté un contrôleur central C relié par l'intermédiaire d'une ligne électrique de puissance L, typiquement une ligne bifilaire, à un ou plusieurs périphériques P₁-P_{N}.

Le dimensionnement de la ligne L se fait d'abord par ses caractéristiques basses fréquences et sa capacité à supporter des tensions élevées et des courants importants. Des contraintes de câblage peuvent par ailleurs imposer que les deux conducteurs soient associés sous la forme d'une paire torsadée, non nécessairement blindée, réalisant une impédance itérative de valeur connue, comprise typiquement entre 50 et 300 ohms.

Plus précisément, un périphérique P₁-P_{N} est relié à la ligne électrique L via une interface de raccordement Ir.

Le contrôleur central C comporte un émetteur de puissance 1 DC ou AC, préférentiellement isolé pour respecter les recommandations avionneurs pour ce qui concerne la tenue aux effets du foudroiement.

Comme cela sera détaillé par la suite, le contrôleur central C réalise :
- l'alimentation de la ligne, par exemple en tension continue haut niveau (par exemple ± 270 V), pour la transmission de puissance vers les périphériques distants ;
- un couplage hautes fréquences pour la transmission d'informations binaires bidirectionnelles.

La ségrégation de l'alimentation vis-à-vis des signaux de communication est assurée par un condensateur C_{C}__{BF} permettant d'assurer un chemin basse impédance aux signaux hautes fréquences, auquel peut être adjoint des impédances en série dans la ligne de transmission (inductance de mode commun (MC) et de mode différentiel (MD) pour les composantes hautes fréquences), ainsi qu'une isolation galvanique de l'émetteur de puissance 1 pour les composantes basses fréquences.

La ségrégation des signaux de communication vis-à vis des tensions d'alimentations est quant à elle réalisée par filtrage passe haut (condensateur C_{C}__{HF}).

Le contrôleur central peut comprendre des inductances MC de filtrage de Mode Commun ayant pour rôle d'augmenter l'impédance série en mode commun de la ligne L vis-à-vis des perturbations transmises (par l'émetteur de puissance 1) ou reçues par la ligne elle-même. Les inductances MC peuvent être de valeur élevée, donc d'impédance résultante aussi élevée, ce qui est de contribution favorable à la tenue des contraintes CEM (susceptibilité et émission).

Le contrôleur central peut comprendre des inductances MD de Mode Différentiel ayant pour rôle d'augmenter l'impédance de la ligne L en mode différentiel au regard des composantes hautes fréquences issues de l'émetteur de puissance 1. L'objectif final, en plus de l'amélioration globale vis-à-vis de la compatibilité CEM, est de limiter le plus possible le niveau de bruit transmis sur la ligne L, ce dernier dégradant le rapport signal à bruit du message reçu et étant donc néfaste à la bonne capacité de réception des bits transmis par la ligne.

Le contrôleur central C comporte un filtre passe-bas agencé entre l'émetteur de puissance 1 et la ligne électrique L.

Le contrôleur central C comporte par ailleurs des moyens d'émission-réception de données en bande de base 3 ainsi qu'un filtre passe-haut agencé entre les moyens d'émission-réception de données et la ligne électrique L.

Selon un mode de réalisation possible de l'invention représenté sur la figure 1, le filtre passe-haut est ainsi formé par le condensateur C_{C}__{HF} (en basse-fréquence le condensateur C_{C}__{HF} agit comme un interrupteur ouvert), tandis que le filtre passe-bas est formé par le condensateur C_{C}__{BF} (en haute fréquence le condensateur C_{C}__{BF} agit comme un interrupteur fermé formant ainsi un court-circuit).

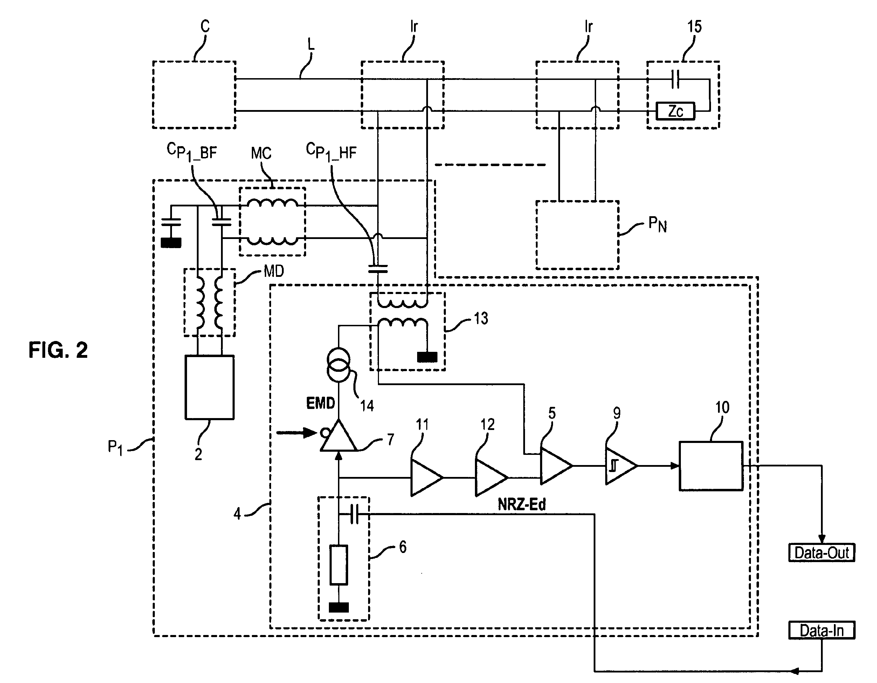

On a représenté sur la figure 2, un mode de réalisation possible d'un périphérique distant P₁ conforme à l'invention. Le périphérique P₁ comporte un récepteur de puissance 2, préférentiellement isolé pour respecter les recommandations avionneurs pour ce qui concerne la tenue aux effets du foudroiement.

Le périphérique P₁ comporte un filtre passe-bas agencé entre le récepteur de puissance 2 et la ligne électrique L.

Le périphérique P₁ comporte par ailleurs des moyens d'émission-réception de données en bande de base 4 ainsi qu'un filtre passe-haut agencé entre les moyens d'émission-réception de données et la ligne électrique L.

Selon un mode de réalisation possible de l'invention représenté sur la figure 2, le filtre passe-haut est ainsi formé par le condensateur C_{P1}__{HF} (en basse-fréquence le condensateur C_{P1}__{HF} agit comme un interrupteur ouvert), tandis que le filtre passe-bas est formé par le condensateur C_{P1_BF} (en haute fréquence le condensateur C_{P1}-_{BF} agit comme un interrupteur fermé formant ainsi un court-circuit).

Ainsi, dans le cadre de l'invention, la tension d'alimentation est séparée des données par le biais de filtres passe-haut et passe-bas passifs. La ligne électrique de puissance L se trouve ainsi mutualisée pour la transmission de la puissance du contrôleur central vers un ou plusieurs périphériques distants et la transmission bidirectionnelle simultanée de données en bande de base entre le contrôleur central et le ou les périphériques distants.

Les moyens d'émission-réception de données en bande de base 3 du contrôleur central C et les moyens d'émission-réception de données en bande de base 4 du périphérique distant P₁ sont chacun configurés pour émettre des données « Data-In » et pour recevoir des données « Data-Out »

Les moyens d'émission-réception 3, 4 permettent ainsi de réaliser l'addition de deux flux binaires à la tension d'alimentation sur une unique ligne électrique de puissance (un flux montant correspondant aux données émises par le ou les périphériques distants P₁-P_{N} à destination du contrôleur central C ; un flux descendant correspondant aux données émises par le contrôleur C à destination du ou des périphériques distants P₁-P_{N})

Préférentiellement, les moyens d'émission-réception 3, 4 sont configurés pour émettre les données en bande de base selon le codage NRZ.

Comme représenté sur les figures 1 à 3, les moyens d'émissionréception 3 du contrôleur C sont configurés pour émettre un message binaire « NRZ-E » tandis que les moyens d'émission-réception 4 du périphérique P1 sont configurés pour émettre un message binaire « NRZ-Ed ».

La suite de la description concerne un mode de réalisation possible des moyens d'émission-réception 3 du contrôleur C. On comprendra que cette description s'applique également aux moyens d'émission-réception 4 d'un périphérique distant P1. A ce titre, les éléments similaires portent les mêmes références sur les figures 1 et 2.

### Emission des données

Les données numériques à transmettre « NRZ-E » parcourent un circuit d'émission.

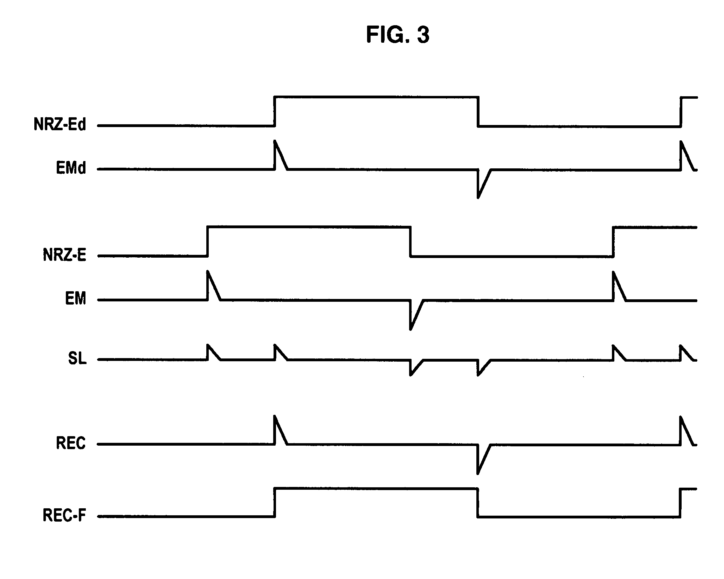

De manière préférentielle, le circuit d'émission comprend un filtre passe-haut 6 qui reçoit les données à transmettre « NRZ-E » sous la forme d'un signal binaire au format RZ, qui assure une composante moyenne nulle à ces données, et qui transmet les états du message binaire au format NRZ. Le signal résultant est représenté sous le label « EM » sur les figures 1 et 3.

De manière similaire, les moyens d'émission-réception 4 du périphérique P₁ comprennent un filtre passe-haut 6 pour transmettre le message binaire « NRZ-Ed » sous la forme d'un message « EMd » représenté sur la figure 3.

Revenant à la description des moyens d'émission-réception 3 du contrôleur central C, le signal résultant « EM » est transmis sur la ligne électrique L au travers d'une résistance 8 de valeur égale à l'impédance caractéristique Zc de la ligne électrique L, puis au travers d'un transformateur 13.

Pour ce qui concerne les moyens d'émission-réception 4 du périphérique distant, le signal « EMd » est transmis sur la ligne électrique L au travers d'un convertisseur Tension / Courant 14 présentant une impédance de sortie quasi-infinie afin de ne pas dégrader l'adaptation de la ligne, puis au travers d'un transformateur 13.

On retiendra que le transformateur 13 permet d'assurer une fonction d'isolation et de sécurisation vis-à-vis des contraintes foudre.

Comme représenté sur les figures 1 et 2, la ligne électrique L comporte un circuit bouchon d'adaptation 15. Le circuit bouchon 15 et la résistance 8 du contrôleur central C permettent, considérant également que les périphériques ne dégradent pas l'adaptation de la ligne L, d'adapter la ligne électrique L à chacune ses extrémités sur son impédance caractéristique Zc.

En variante à la présence de la résistance d'adaptation 8 dans les moyens d'émission-réception 3 du contrôleur central C, on retiendra que l'on peut prévoir un circuit bouchon au sein du contrôleur central.

Le circuit d'émission du contrôleur central C ou du périphérique P1 peut en outre comprendre, en aval du filtre passe-haut 6, un amplificateur d'émission 7 présentant une résistance de sortie très faible (considérée comme quasi nulle). De telle sorte, la tension de sortie ne comprend que le message émis en local.

### Réception des données

Les données SL transitant sur la ligne électrique correspondent au signal EM émis par le contrôleur central et au signal (ou aux signaux) EMd émis par le (ou les) périphérique(s) P1 (-PN). On réalise ainsi une transmission bidirectionnelle simultanée sur la ligne électrique L.

La figure 3 représente un tel signal SL correspondant à l'addition des deux flux EM (flux descendant) et EMd (flux montant) sur la ligne L.

Les moyens d'émission-réception 3 du contrôleur C comprennent un amplificateur différentiel haute fréquence 5 apte à discriminer, parmi les données SL transitant sur la ligne électrique L, les données émises en local (NRZ-E) des données à recevoir (NRZ-Ed).

L'amplificateur différentiel 5 permet ainsi de ségréguer le flux descendant du flux montant.

Selon un mode de réalisation préférentiel, l'amplificateur différentiel 5 reçoit d'une part le signal SL transitant sur la ligne L au travers du transformateur 13, et d'autre part le signal émis (EM pour le contrôleur C, EMd pour le périphérique P1) au travers d'un atténuateur 11 et d'un retardateur 12. L'atténuateur 11 permet de réaliser une adaptation de niveau afin d'ajuster le gain du signal émis en fonction des différentes atténuations de la ligne L. Le retardateur 12 permet quant à lui de compenser le retard induit par la ligne L.

Le flux montant ainsi discriminé par l'amplificateur différentiel 5 parcourt un circuit de réception comprenant un circuit d'amplification et un comparateur à hystérésis 9 apte à reconstituer le message émis par le périphérique. On relèvera que le comparateur à hystérésis 9 est également utile pour débarrasser le message reçu d'éventuelles « traces » du signal émis non parfaitement discriminées par le transformateur différentiel 5.

### Récupération du message binaire reçu

La réception du message binaire reçu peut être réalisée dans un circuit logique programmable (FPGA).

Le circuit de réception comporte en outre des moyens de régénération 10 de l'horloge qui a servi à la constitution du message NRZ.

Ces moyens de régénération ont pour fonctions de créer une horloge « bit » et d'échantillonner les données reçues à l'aide de l'horloge ainsi créée au moment de meilleure discrimination possible entre niveau logique 1 et niveau logique 0.

Selon un mode de réalisation possible de l'invention, ces moyens de régénération de l'horloge forment une boucle à verrouillage de phase.

Cette boucle à verrouillage de phase peut notamment être réalisée numériquement.

Le signal REC-F en sortie du comparateur à hystérésis 9 est ainsi échantillonné par le rythme élaboré par les moyens de régénération de l'horloge 10, de manière à être correctement restitué sur la sortie « Data-Out ».

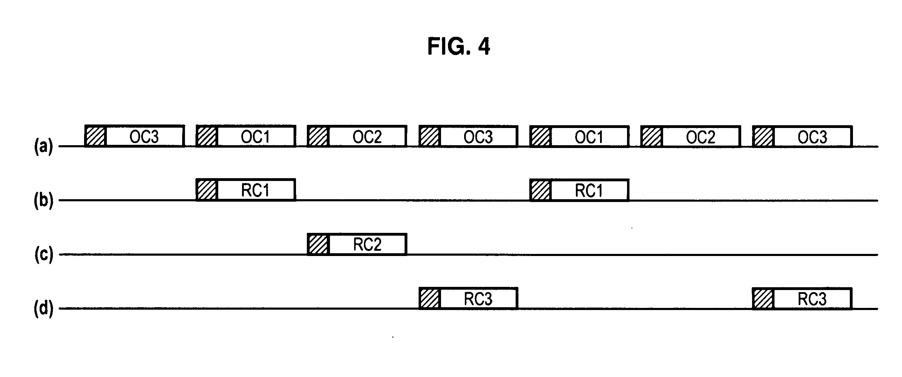

On a représenté sur la figure 4 un mode de réalisation possible des échanges de données entre le contrôleur central et les différents périphériques auxquels il est relié.

Dans ce mode de réalisation, les moyens d'émission-réception 3 du contrôleur central sont configurés pour émettre des données à l'attention d'un périphérique distant dans un intervalle de temps consacré au périphérique.

La ligne (a) représente à ce titre la succession des différentes trames de données élaborées par le contrôleur central (ces trames sont dites trames Maître par la suite), chacune de ces trames correspondant à l'agrégation d'un ordre pour un périphérique donné et d'un en-tête comprenant des éléments de synchronisation et d'égalisation. La référence OC3 correspond ainsi à un ordre pour le périphérique P3, la référence OC1 à un ordre pour le périphérique P1, la référence OC2 à un ordre pour le périphérique P2.

Les moyens d'émission-réception 4 d'un périphérique P1-PN sont quant à eux configurés pour émettre des données à l'attention du contrôleur central C dans l'intervalle de temps correspondant à celui de la réception d'un ordre en provenance du contrôleur central C. Ainsi, comme cela apparaît sur la ligne (b) de la figure 4, le périphérique P1 envoie une trame (cette trame est dite trames Coupleur par la suite), correspondant à l'agrégation d'un message RC1 et d'un en-tête comprenant des éléments de synchronisation et d'égalisation, à l'attention du contrôleur central uniquement dans l'intervalle de temps correspondant à la réception d'un ordre OC1 du contrôleur central. Les lignes (c) et (d) illustrent quant à elles l'envoi d'une trame par les périphériques P2 et P3 à destination du contrôleur central, pendant les intervalles de temps correspondant respectivement à la réception d'un ordre OC2 et OC3.

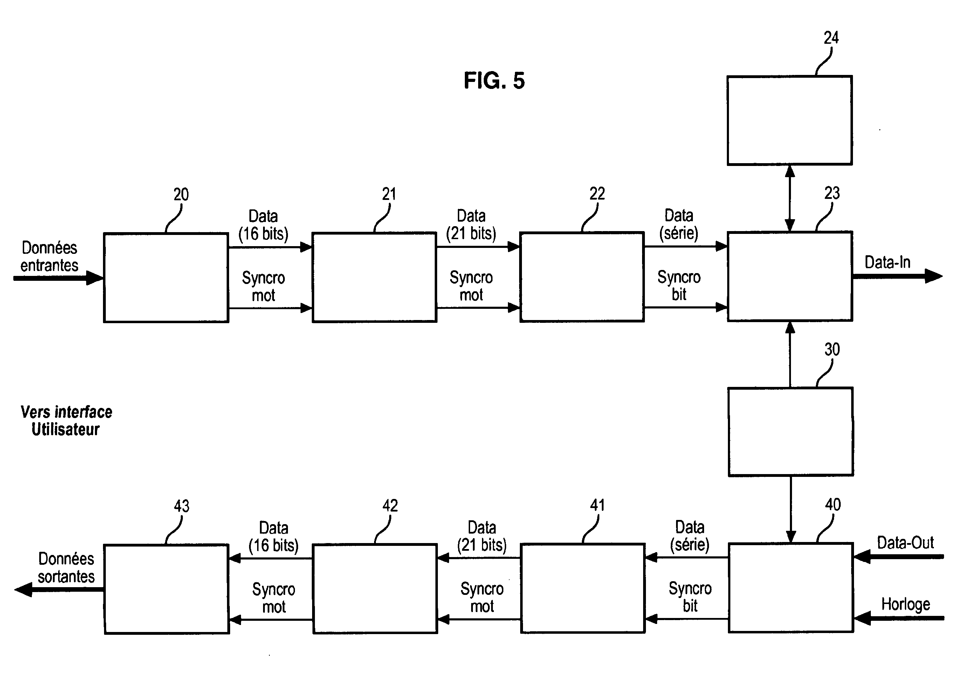

On détaille ci-après en référence à la figure 5 un mode de réalisation possible d'un traitement haut niveau réalisé au niveau du contrôleur central d'une part sur les données entrantes pour constituer les données série bas niveau « Data-In » fournies en entrée des moyens d'émission-réception, et d'autre part sur les données série bas niveau « Data-Out » obtenues en sortie des moyens d'émission-réception pour constituer les données sortantes. On relèvera que le ou les périphériques réalisent un traitement haut niveau similaire.

Le développement de la fonction d'interface de la figure 5 pour les couches bas niveau traités par les moyens d'émission-réception permet au système de supporter différents protocoles avioniques (ARINC 429, MIL 1553, TTP, etc.).

En particulier, la couche électrique associée à l'interface numérique propriétaire de la demanderesse peut être personnalisée pour interfacer différents standards avioniques tels que ARINC 429 ou autres. La solution proposée par l'invention apporte un support d'échange d'informations numériques parfaitement déterministe permettant la création de canaux virtuels de communication. Par exemple, le contrôleur central peut fournir une interface d'entrée et de sortie pour ARINC 429, et de même pour le périphérique distant concerné. Deux équipements ARINC 429 classiques peuvent y être raccordés et utilisés d'une manière totalement transparente pour eux. Il peut en être de même pour d'autres standards de communication.

Cette fonction d'interface présente en outre l'avantage de pouvoir être mise en oeuvre à l'aide de composants programmables standard (FPGA).

Comme représenté sur la figure 5, les données entrantes sont soumises aux opérations suivantes, en succession. Les données entrantes sont tout d'abord traitées par un bloc 20 apte à les découper en mots de 16 bits et à ajouter des éléments de synchronisation (un signal délimiteur du mot de 16 bits est ainsi transmis par le bloc 20 au bloc 21). Au bloc 21, on génère 5 bits additionnels correspondant à des bits destinés à permettre la correction d'erreurs, par exemple en mettant en oeuvre le codage de Hamming. Au bloc 22, on stocke une suite de mots de 21 bits issus du bloc 21 et on constitue ainsi une suite de plusieurs mots (dont le nombre est dépendant des éléments parasites présents sur la ligne de transmission). Enfin, on les réémets selon une séquence pseudo aléatoire (séquence de brouillage) permettant d'étaler les suites d'erreurs au moment de la réception, ainsi d'augmenter l'efficacité de l'autocorrecteur.

Le bloc 30 est le générateur des trames émises sur la ligne « Data-In ». Il génère une suite d'espaces temporels délimités par des motifs de synchronisation.

Le bloc 23 complète régulièrement les espaces temporels par les données élaborées dans le bloc 22.

Le bloc 24 assure quant à lui le stockage temporaire (en mode FIFO) des données émises par le bloc 22, afin de pouvoir adapter les asynchronismes des deux automates (data et trame venant du bloc 30). Les différences de rythmes entre le débit de données issues du bloc 22 et la mise à disposition d'espaces temporels est gérée par l'affectation à ces derniers de motifs de remplissage en cas d'absence de donnée disponible.

Le bloc 30 transmet aussi les motifs de synchronisation au bloc 40, permettant à celui-ci de se synchroniser sur les données entrantes « Data-Out ».

Le bloc 23 fournit en sortie les trames Maître sous la forme de données série en bande de base, notamment au format NRZ.

Selon un mode de réalisation possible de l'invention ces données série en bande de base sont ensuite filtrées par un filtre passe-bas (non représenté) permettant de réduire les harmoniques du NRZ, avant d'être envoyées aux moyens d'émission-réception. Le filtre passe-bas est par exemple du 6^{ème} ordre, à réponse de Bessel pour n'affecter qu'un retard constant, dont la fréquence de coupure est calée à 0,7 * Fréquence Bits.

Les données « Data-Out » obtenues en sortie des moyens d'émission-réception, ainsi que leur horloge régénérée, sont quant à elles soumises à un bloc 40 formant interface de réception des trames Coupleurs, relié au bloc 30 de génération des trame Maître, pour extraire les données série et le bit de synchronisation. Au bloc 41, la synchronisation et le débrouillage des données sont réalisés pour reconstituer les mots de 21 bits. Ces derniers sont traités au bloc 42 par application des autocorrecteurs pour reconstituer les mots de 16 bits corrigés des erreurs. Le bloc 43 forme une interface utilisateur permettant de restituer les données haut niveau.

L'invention permet en outre une meilleure maîtrise des parasites de commutations. La (Les) tension(s) d'alimentation de la ligne électrique de puissances va (vont) être utilisée(s) afin de piloter par exemple des moteurs ou des convertisseurs DC/DC à découpage. Ces éléments génèrent des parasites lors des commutations. Afin de mieux contrôler ces parasites, la synchronisation de toutes les commutations avec l'horloge de communication peut être réalisée par le contrôleur C ainsi que par les périphériques P₁(-P_{N}).

On précise que l'invention n'est pas limitée à un contrôleur central ou à un périphérique distant tels que décrits précédemment, mais s'étend également à un système, notamment un système avionique, comprenant un contrôleur relié à un ou plusieurs périphériques distants par l'intermédiaire d'une ligne électrique mutualisée pour la transmission de puissance et de données bidirectionnelles.

Les avantages de ce système sont en particulier les suivants :
- Une seule ligne bifilaire mutualisée pour transmission de la puissance et de données bidirectionnelles (typiquement une ligne bifilaire blindée, dimensionnée principalement par la tension de service et l'intensité du courant à faire circuler, à quoi s'ajoute une contrainte de géométrie physique : distance inter-conducteurs constante et diélectrique homogène).
- Protections foudres communes (par fusion des protections foudre pour la puissance et le signal)
- Différents standards de communication possibles (canal déterministe banalisé pouvant supporter différents standards avionique moyennant l'ajout d'une surcouche numérique d'interface)
- Transmission numérique bidirectionnelle simultanée (chaque flux est indépendant)
- Minimisation de l'occupation spectrale (par opposition à une transmission à porteuses multiples, du fait de la transmission en bande de base, par exemple en NRZ, avec spectre limité par filtrage)
- Isolation galvanique de la ligne de données (par transformateurs de couplage)
- Possibilité d'isolation galvanique de la ligne de puissance (par le convertisseur DC/DC ou AC/DC placé dans le contrôleur central)
- Compatibilité CEM et Foudre (concernant CEM, du fait de la minimisation du spectre occupé par les données transmises : transmission en bande de base - NRZ par exemple - et filtrage, ainsi que du fait de ne pas utiliser de porteuse Haute Fréquence ou de Multi Porteuses, type COFDM par exemple. Concernant la foudre, du fait des différentes isolations galvaniques proposées).
- Justification DO254 possible, même pour les niveaux les plus critiques (l'ensemble des fonctions complexes est effectivement maîtrisé, ce qui rend la justification possible, par opposition à des composants COTS dont les justifications ne sont pas fournies par les constructeurs).

## Revendications

1. Dispositif formant contrôleur central (C) destiné à être relié à un périphérique distant (P₁-P_{N}) par l'intermédiaire d'une ligne électrique de puissance (L) d'un système avionique, comprenant un émetteur de puissance (1) et un filtre passe-bas (C_{C}__{BF}) agencé entre l'émetteur de puissance et la ligne électrique, **caractérisé en ce qu'**il comporte des moyens d'émission-réception (3) de données en bande de base et un filtre passe-haut (C_{C}__{HF}) agencé entre les moyens d'émission-réception de données et la ligne électrique, la ligne électrique étant de la sorte mutualisée pour la transmission de puissance en basse fréquence du contrôleur central vers le périphérique distant et pour la transmission bidirectionnelle simultanée de données en bande de base en haute fréquence entre le contrôleur central et le périphérique distant, les moyens d'émission-réception de données (3, 4) comprenant un amplificateur différentiel (5) apte à discriminer, parmi les données transitant sur la ligne électrique, les données émises en local (EM) des données à recevoir (REC).

2. Dispositif formant périphérique distant (P₁-P_{N}) destiné à être relié à un contrôleur central (C) par l'intermédiaire d'une ligne électrique de puissance (L) d'un système avionique, comprenant un récepteur de puissance (2) et un filtre passe-bas (C_{P1}__{BF}) agencé entre le récepteur de puissance et la ligne électrique, **caractérisé en ce qu'**il comporte des moyens d'émission-réception de données (4) en bande de base et un filtre passe-haut (C_{P1 _HF}) agencé entre les moyens d'émission-réception de données et la ligne électrique, la ligne électrique étant de la sorte mutualisée pour la transmission de puissance en basse fréquence du contrôleur central vers le périphérique distant et pour la transmission bidirectionnelle simultanée de données en bande de base en haute fréquence entre le contrôleur central et le périphérique distant, les moyens d'émission-réception de données (3, 4) comprenant un amplificateur différentiel (5) apte à discriminer, parmi les données transitant sur la ligne électrique, les données émises en local (EM) des données à recevoir (REC).

3. Dispositif selon l'une des revendications 1 ou 2, dans lequel l'amplificateur reçoit d'une part les données transitant sur la ligne au travers d'un transformateur (13) et d'autre part les données émises en local au travers d'un atténuateur de gain (11) et d'un retardateur (12).

4. Dispositif selon la revendication 3, dans lequel les données à recevoir discriminées par l'amplificateur différentiel parcourent un circuit de réception comprenant un comparateur à hystérésis (9) apte à reconstituer les états binaires du message reçu (REC-F).

5. Dispositif selon la revendication 4, dans lequel le circuit de réception comprend en outre des moyens de régénération de l'horloge (10) du message reçu.

6. Dispositif selon l'une des revendications 1 ou 2, dans lequel les données émises en local parcourent un chemin d'émission comprenant un filtre passe haut (6) recevant les données à transmettre sous la forme d'un signal binaire et adapté pour assurer une composante moyenne nulle à ces données.

7. Dispositif selon la revendication 1, dans lequel les données émises en local parcourent un chemin d'émission comprenant une résistance (8) de valeur égale à l'impédance caractéristique de la ligne électrique.

8. Dispositif selon la revendication 1, dans lequel les données émises en local parcourent un chemin d'émission comprenant un convertisseur Tension / Courant (14) présentant une résistance de sortie quasi infinie.

9. Dispositif selon l'une des revendications 1 à 8, dans lequel les moyens d'émission-réception sont configurés pour émettre les données en bande de base selon le codage NRZ.

10. Dispositif selon l'une des revendications 1 à 9, dans lequel les moyens d'émission-réception sont configurés pour mettre en oeuvre des fonctions de brouillage et d'autocorrection.

11. Dispositif formant contrôleur central (C) selon la revendication 1, dans lequel les moyens d'émission-réception (3) sont configurés pour émettre des données (OC1, OC2, OC3) à l'attention d'un périphérique distant (P₁-P_{N}) dans un intervalle de temps consacré au périphérique.

12. Dispositif formant contrôleur central selon la revendication 11, dans lequel les moyens d'émission-réception sont configurés pour recevoir des données (RC1, RC2, RC3) provenant d'un périphérique distant (P₁-P_{N}) dans le même intervalle de temps que celui consacré pour l'émission de données (OC1, OC2, OC3) à l'attention dudit périphérique distant.

13. Dispositif formant périphérique distant (P₁-P_{N}) selon la revendication 2, dans lequel les moyens d'émission-réception (4) sont configurés pour recevoir des données (OC1, OC2, OC3) provenant d'un contrôleur central (C) dans un intervalle de temps consacré par le contrôleur central au périphérique.

14. Dispositif selon la revendication 13, dans lequel les moyens d'émission-réception sont configurés pour émettre des données (RC1, RC2, RC3) à l'attention du contrôleur central dans le même intervalle de temps que celui consacré pour la réception de données (OC1, OC2, OC3) depuis ledit contrôleur central.

15. Système avionique comprenant un dispositif formant contrôleur central (C) selon la revendication 1 relié par l'intermédiaire d'une ligne électrique de puissance (L) à un ou plusieurs dispositifs formant périphérique distant (P₁-P_{N}) selon la revendication 2.

## Claims

1. Device forming a central controller (C) intended to be linked to a remote peripheral (P₁-P_{N}) by way of an electrical power line (L) of an avionic system, comprising a power transmitter (1) and a low-pass filter (C_{C}-_{BF}) arranged between the power transmitter and the electrical line, **characterised in that** it comprises means for transmitting / receiving data (3) in baseband and a high-pass filter (C_{C}__{HF}) arranged between the data transmission / reception means and the electrical line, the electrical line being thereby mutualized for the transmission of power at low frequency from the central controller to the remote peripheral and for the simultaneous bidirectional transmission of data in baseband at high frequency between the central controller and the remote peripheral, the data transmission / reception means (3, 4) comprising a differential amplifier (5) able to discriminate, among the data transiting on the electrical line, the data transmitted locally (EM) from data to be received (REC).

2. Device forming a remote peripheral (P₁-P_{N}) intended to be linked to a central controller (C) by way of an electrical power line (L) of an avionic system, comprising a power receiver (2) and a low-pass filter (C_{P1}__{BF}) arranged between the power receiver and the electrical line, **characterised in that** it comprises means for transmitting / receiving data (4) in baseband and a high-pass filter (C_{P1}__{HF}) arranged between the data transmission / reception means and the electrical line, the electrical line being thereby mutualized for the transmission of power at low frequency from the central controller to the remote peripheral and for the simultaneous bidirectional transmission of data in baseband at high frequency between the central controller and the remote peripheral, the data transmission / reception means (3, 4) comprising a differential amplifier (5) able to discriminate, among the data transiting on the electrical line, the data transmitted locally (EM) from data to be received (REC).

3. Device according to one of claims 1 or 2, wherein the amplifier receives on the one hand the data transiting on the line through a transformer (13) and on the other hand the data transmitted locally through a gain attenuator (11) and a retarder (12).

4. Device according to claim 3, wherein the data to be received discriminated by the differential amplifier flows through a reception circuit comprising a hysterisis comparator (9) able to reconstitute the binary states of the message received (REC-F).

5. Device according to claim 4, wherein the reception circuit moreover comprises means of regeneration of the clock (10) of the message received.

6. Device according to one of claims 1 or 2, wherein the data transmitted locally flows through a transmission path comprising a high-pass filter (6) receiving the data to transmit in the form of a binary signal and adapted to ensure a zero average component to these data.

7. Device according to claim 1, wherein the data transmitted locally flow through a transmission path comprising a resistance (8) of value equal to the characteristic impedance of the electrical line.

8. Device according to claim 1, wherein the data transmitted locally flow through a transmission path comprising a voltage / current converter (14) having a quasi-infinite output resistance.

9. Device according to one of claims 1 to 8, wherein the transmission / reception means are configured to transmit the data in baseband according to NRZ coding.

10. Device according to one of claims 1 to 9, wherein the transmission / reception means are configured to implement scrambling and self-correcting functions.

11. Device forming a central controller (C) according to claim 1, wherein the transmission / reception means (3) are configured to transmit data (OC1, OC2, OC3) for the attention of a remote peripheral (P₁-P_{N}) in a time interval dedicated to the peripheral.

12. Device forming a central controller according to claim 11, wherein the transmission / reception means are configured to receive data (RC1, RC2, RC3) coming from a remote peripheral (P₁-P_{N}) in the same time interval as that dedicated for the transmission of data (OC1, OC2, OC3) for the attention of said remote peripheral.

13. Device forming a remote peripheral (P₁-P_{N}) according to claim 2, wherein the transmission / reception means (4) are configured to receive data (OC1, OC2, OC3) coming from a central controller (C) in a time interval dedicated by the central controller to the peripheral.

14. Device according to claim 13, wherein the transmission / reception means are configured to transmit data (RC1, RC2, RC3) for the attention of the central controller in the same time interval as that dedicated for the reception of data (OC1, OC2, OC3) from said central controller.

15. Avionic system comprising a device forming a central controller (C) according to claim 1 linked by way of an electrical power line (L) to one or more devices forming a remote peripheral (P₁-P_{N}) according to claim 2.

## Patentansprüche

1. Vorrichtung, die eine zentrale Steuereinrichtung (C) ausbildet, die vorgesehen ist, mit einem entfernten Peripheriegerät (P₁-P_{N}) über eine elektrische Stromleitung (L) eines Avionik-Systems verbunden zu werden, aufweisend
einen Leistungssender (1) und einen Tiefpassfilter (C_{C}__{BF}), der zwischen dem Leistungssender und der elektrischen Leitung angeordnet ist, **dadurch gekennzeichnet, dass**
die Vorrichtung aufweist ein Mittel (3) zum Senden/Empfangen von Daten in einem Basisband und einen Hochpassfilter (C_{C_HF}), der zwischen dem Mittel zum Senden/Empfangen der Daten und der elektrischen Leitung angeordnet ist,
wobei die elektrische Leitung eine zur gemeinsamen Nutzung für das Senden von einer Leistung bei tiefer Frequenz von der zentralen Steuereinrichtung zu dem entfernten Peripheriegerät und für das simultane bidirektionale Senden von Daten im Basisband bei hoher Frequenz zwischen der zentralen Steuereinrichtung und dem entfernten Peripheriegerät ist,
wobei das Mittel (3, 4) zum Senden/Empfangen der Daten einen Differenzverstärker (5) aufweist, der eingerichtet ist, unter den Daten, die die elektrische Leitung durchlaufen, lokal gesendete Daten (EM) von zu empfangenden Daten (REC) zu unterscheiden.

2. Vorrichtung, die ein entferntes Peripheriegerät (P₁-P_{N}) ausbildet, das vorgesehen ist, mit einer zentralen Steuereinrichtung (C) über eine elektrische Stromleitung (L) eines Avionik-Systems verbunden zu werden, aufweisend
einen Leistungsempfänger (2) und einen Tiefpassfilter (C_{P1}__{BF}), der zwischen dem Leistungsempfänger und der elektrischen Leitung angeordnet ist, **dadurch gekennzeichnet, dass**
die Vorrichtung aufweist ein Mittel (4) zum Senden/Empfangen von Daten in einem Basisband und einen Hochpassfilter (C_{P1_HF}), der zwischen dem Mittel zum Senden/Empfangen der Daten und der elektrischen Leitung angeordnet ist,
wobei die elektrische Leitung eine zur gemeinsamen Nutzung für das Senden von einer Leistung bei tiefer Frequenz von der zentralen Steuereinrichtung zu dem entfernten Peripheriegerät und für das simultane bidirektionale Senden von Daten in dem Basisband bei hoher Frequenz zwischen der zentralen Steuereinrichtung und dem entfernten Peripheriegerät ist,
wobei das Mittel (3, 4) zum Senden/Empfangen der Daten einen Differenzverstärker (5) aufweist,
der eingerichtet ist, unter den Daten, die die elektrische Leitung durchlaufen, die lokal gesendeten Daten (EM) von zu empfangenden Daten (REC) zu unterscheiden.

3. Vorrichtung gemäß einem der Ansprüche 1 oder 2,
wobei der Verstärker einerseits mittels eines Transformators (13) die Leitung durchlaufende Daten und andererseits mittels eines Verstärkungsabschwächers (11) und eines Verzögerers (12) die lokal gesendeten Daten empfängt.

4. Vorrichtung gemäß Anspruch 3,
wobei die zu empfangenden Daten, die durch den Differenzverstärker unterschieden werden, eine Empfangsschaltung durchlaufen, die einen Hysterese-Vergleicher (9) aufweist, der angepasst ist, die binären Zustände der empfangenen Nachricht (REC-F) neu zu bilden.

5. Vorrichtung gemäß Anspruch 4,
wobei die Empfangsschaltung weiterhin ein Mittel (10) zur Taktregenerierung der empfangenen Nachricht aufweist.

6. Vorrichtung gemäß einem der Ansprüche 1 oder 2,
wobei die lokal gesendeten Daten einen Sendeweg durchlaufen, der einen Hochpassfilter (6) aufweist,
der die Daten zum Senden in Form eines binären Signals empfängt und angepasst ist, eine Null-Mittelwert-Komponente bei diesen Daten zu gewährleisten.

7. Vorrichtung gemäß Anspruch 1,
wobei die lokal gesendeten Daten einen Sendeweg durchlaufen, der einen Widerstand (8) mit einem Widerstandswert gleich der charakteristischen Impedanz der elektrischen Leitung hat.

8. Vorrichtung gemäß Anspruch 1,
wobei die lokal gesendeten Daten einen Sendeweg durchlaufen, der einen Spannungs-/Strom-Konverter (14) aufweist, der einen quasiinfiniten Ausgangswiderstand aufweist.

9. Vorrichtung gemäß einem der Ansprüche 1 bis 8,
wobei das Mittel zum Senden/Empfangen zur Sendung der Daten in dem Basisband gemäß der NRZ-Kodierung eingerichtet ist.

10. Vorrichtung gemäß einem der Ansprüche 1 bis 9,
wobei das Mittel zum Senden/Empfangen zur Ausführung von Störungs- und Autokorrekturfunktionen eingerichtet ist.

11. Vorrichtung, die eine zentrale Steuereinrichtung (C) ausbildet, gemäß Anspruch 1,
wobei das Mittel (3) zum Senden/Empfangen zur Sendung von Daten (OC1, OC2, OC3), gerichtet an ein entferntes Peripheriegerät (P₁-P_{N}), in einem Zeitintervall, welches dem Peripheriegerät zugeordnet ist, eingerichtet ist.

12. Vorrichtung, die eine zentrale Steuereinrichtung ausbildet, gemäß Anspruch 11,
wobei das Mittel zum Senden/Empfangen zum Empfangen von Daten (RC1, RC2, RC3), die von einem entfernten Peripheriegerät (P₁-P_{N}) stammen, in dem gleichen Zeitintervall wie jenes, welches zur Sendung von Daten (OC1, OC2, OC3), gerichtet an das entfernte Peripheriegerät, eingerichtet ist.

13. Vorrichtung, die einen entferntes Peripheriegerät (P₁-P_{N}) ausbildet, gemäß Anspruch 2,
wobei das Mittel (4) zum Senden/Empfangen zum Empfangen von Daten (OC1, OC2, OC3), die von einer zentralen Steuereinrichtung (C) stammen, in einem Zeitintervall, das durch die zentrale Steuereinheit zugeordnet wird, zu dem Peripheriegerät eingerichtet ist.

14. Vorrichtung gemäß Anspruch 13,
wobei das Mittel zum Senden/Empfangen zum Senden von Daten (RC1, RC2, RC3), gerichtet an die zentrale Steuereinrichtung, in dem gleichen Zeitintervall wie jenes, welches für den Empfang von Daten (OC1, OC2, OC3) von der zentralen Steuereinrichtung zugeordnet ist, eingerichtet ist.

15. Avionik-System, aufweisend eine Vorrichtung, die eine zentrale Steuereinrichtung (C) ausbildet, gemäß Anspruch 1,
die über eine elektrische Stromleitung (L) mit einer oder mehreren Vorrichtungen, die entsprechend ein oder mehrere entfernte Peripheriegeräte (P₁-P_{N}) ausbilden, gemäß Anspruch 2 verbunden ist.
